# EUROPÄISCHE PATENTSCHRIFT

(11) **EP 0 973 630 B1**
(45) Veröffentlichungstag und Bekanntmachung des Hinweises auf die Patenterteilung: **09.04.2008**
(21) Anmeldenummer: 98916990.9
(22) Anmeldetag: 18.03.1998
(51) Int. Cl.: B23Q 1/28

(54) **LINEARFÜHRUNG**
LINEAR GUIDE
GUIDAGE LINEAIRE

(30) Priorität: 11.04.1997 DE 19715014
(43) Veröffentlichungstag der Anmeldung: 26.01.2000
(73) Patentinhaber: Schaeffler KG, 91074 Herzogenaurach (DE)
(72) Erfinder: RUDY, Dietmar, D-67655 Kaiserslautern (DE)
(86) Internationale Anmeldenummer: PCT/EP1998/001560
(87) Internationale Veröffentlichungsnummer: WO 1998/046393

(56) Entgegenhaltungen:
- DE-A- 4 334 424
- DE-B- 1 448 549
- DE-B- 1 765 353
- DE-U- 29 505 080
- GB-A- 2 246 088
- US-A- 4 953 988
- US-A- 5 302 062

## Beschreibung

### Gebiet der Erfindung

Die Erfindung betrifft eine Linearführung mit einem längs einer Führungsschiene verfahrbaren Tragkörper und einer Bremsvorrichtung, welche auf die Führungsschiene einwirkende Bremsbacken und einen Kolben aufweist, der in einem Druckraum von einem Druckmittel verschiebbar angeordnet ist, wobei die Bremsvorrichtung außerdem eine auf den Kolben einwirkende Feder aufweist.

### Hintergrund der Erfindung

Linearführungen werden unter anderem bei Werkzeugmaschinen mit Hochgeschwindigkeitsantrieben, Lineartischen und Laserbearbeitungsmaschinen beispielsweise mit Lineardirektantrieben verwendet. Aus dem DE-GM 295 05 080 ist eine solche Linearführung bekannt, bei der die Brems- oder Klemmkraft von dem Druckmittel, z. B. einem hydraulischen Druckmittel wie Öl, aufgebracht wird. Aus sicherheitstechnischen Aspekten ist diese Linearführung jedoch ungeeignet, denn wenn in dem Druckmittel ein ungewollter Druckabbau eintritt, kann ein Bremsen oder Festklemmen des Tragkörpers an der Führungsschiene nicht mehr erfolgen.

### Zusammenfassung der Erfindung

Der Erfindung liegt die Aufgabe zugrunde, eine Linearführung zu schaffen, deren Tragkörper in Notsituationen wie Druckmittelausfall in sicherer Weise an der Führungsschiene mechanisch abgebremst und verklemmt werden kann.

Diese Aufgabe wird erfindungsgemäß dadurch gelöst, daß in dem Tragkörper neben dem Kolben in Längsrichtung der Führungsschiene ein Druckstück angeordnet ist, welches in dem von dem Druckmittel nicht beaufschlagten Zustand des Kolbens von der Feder an eine der Bremsbacken gedrückt ist, die an der Führungsschiene anliegen. Es können auch mehrere Druckstücke verwendet werden. Beispielsweise kann in dem Tragkörper in Längsrichtung der Führungsschiene beidseitig neben dem Kolben jeweils ein von der Feder beaufschlagtes Druckstück angeordnet sein. In dem Bereich des Druckraumes, in welchem sich die der Bremsbacke zugewandte Stirnfläche des Kolbens befindet, kann eine Leitung für das Druckmittel einmünden.

Auf diese Weise erhält man eine Linearführung mit einer mechanischen Notbremse. Insbesondere für senkrechte Tischachsen, bei denen der mechanische Gewichtsausgleich versagt, oder für sich schnell bewegende horizontale Tischachsen, welche direkt angetrieben werden ohne ein mechanisches selbsthemmendes Bauteil, wie eine Antriebsspindel, kann bei einem Druckabfall des Druckmittels die sicherheitstechnisch notwendige Bremsfunktion gewährleistet werden. Bei Bereitstellung von Druckenergie öffnet die Bremse und bei Druckabfall schließt sie.

### Kurze Beschreibung der Zeichnung

Ausführungsbeispiele der Erfindung sind in der Zeichnung dargestellt und werden im folgenden näher beschrieben. Es zeigen:
- Figur 1: eine Seitenansicht eines längs einer Führungsschiene verfahrbaren Tragkörpers einer Linearführung;
- Figur 2: die Linearführung in einem Querschnitt gemäß Linie II-II der Figur 1;
- Figur 3: die Linearführung in einem Querschnitt gemäß,Linie III-III der Figur 1;
- Figur 4: eine Seitenansicht eines längs der Führungsschiene verfahrbaren weiteren Tragkörpers einer Linearführung;
- Figur 5: eine Draufsicht auf die Linearführung gemäß Figur 4;
- Figur 6: einen Längsschnitt durch die Linearführung gemäß Figur 4.

### Ausführliche Beschreibung der Zeichnung

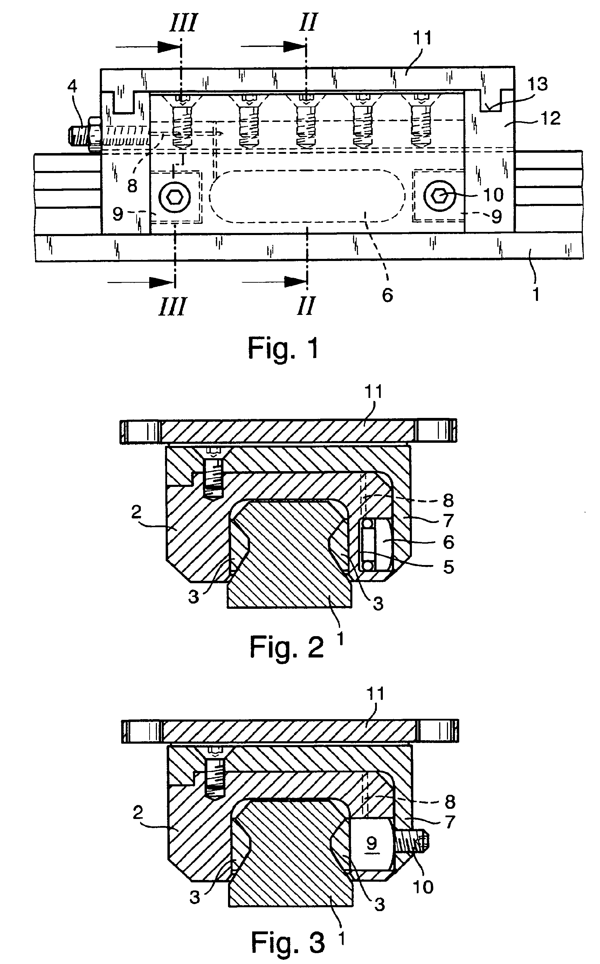

In dem in den Figuren 1 bis 3 dargestellten Ausführungsbeispiel der Erfindung ist an einer Führungsschiene 1 ein Tragkörper 2 abgestützt und längs der Führungsschiene 1 verfahrbar. An den beiden Längsseiten der Führungsschiene 1 liegen Bremsbacken 3 an. Diese sind Teil einer Bremsvorrichtung, mit welcher der Tragkörper 2 an der Führungsschiene 1 festgeklemmt werden kann. Über einen Druckanschluß 4 wird ein in dem Tragkörper 2 ausgebildeter Druckraum 5 mit einem hydraulischen Druckmittel beaufschlagt. Ein in dem Druckraum 5 angeordneter Kolben 6 überträgt aufgrund des Flüssigkeitsdrucks eine Druckkraft auf eine Feder 7, die als Biegefeder ausgebildet und an dem Tragkörper 2 befestigt ist. Eine mit dem Druckanschluß 4 in Verbindung stehende Leitung 8 mündet in dem Bereich des Druckraums 5 ein, in dem der Kolben 6 eine von der Feder 7 abgewandte und auf die benachbarte Bremsbacke 3 gerichtete Stirnfläche aufweist. Wenn also durch die Leitung 8 Druckmittel in den Druckraum 5 einströmt, wird die Feder 7 von dem Kolben 6 nach außen gedrückt.

Die Bremsbacken 3, die sich zwischen der Führungsschiene 1 und dem Tragkörper 2 beidseitig befinden, können aus speziellen Brems- oder Gleitmaterialien bestehen. Zwischen der Feder 7 und der dem Kolben 5 zugewandten Bremsbacke 3 befinden sich außerdem zwei Druckstücke 9 jeweils vor und hinter dem Kolben 6 in Längsrichtung der Führungsschiene 1. Überschreitet die Kraft des Kolbens 6 infolge des Flüssigkeitsdrucks des Druckmittels im Druckraum 5 die Vorspannkraft der Feder 7, so sind die Druckstücke 9 unbelastet und können keine Kraft mehr auf die zugehörige Bremsbacke 3 ausüben. Der Tragkörper 2 ist dann nicht an der Führungsschiene 1 festgeklemmt und somit längs dieser in Führungsrichtung leicht verschieblich.

Wenn infolge einer Notsituation der Druck im Druckraum 5 abfällt, so verschwindet auch die von dem Kolben 6 auf die Feder 7 ausgeübte Kraft. Dieses kann bewußt langsam oder auch schlagartig geschehen. Die Feder 7, die durch Schrauben 10 elastisch vorgespannt werden kann, wird nun nicht mehr an dem Kolben 6 abgestützt, sondern sie biegt sich in die vorgespannte Ausgangslage zurück, bis sie voll an den Druckstücken 9 anliegt. Damit übt die Feder 7 eine Federkraft über die Druckstücke 9 auf die benachbarte Bremsbacke 3 aus, die sich wiederum an der Führungsschiene 1 abstützt. Da die Feder 7 an dem Tragkörper 2 befestigt ist, zieht die Reaktionskraft der Feder 7 nun auch den Tragkörper 2 über die weitere Bremsbacke 3, die an der anderen Längsseite der Führungsschiene 1 anliegt, ebenfalls an die Führungsschiene. Dieses setzt voraus, daß ein Mitnehmer 11 des Tragkörpers 2 für eine Anschlußkonstruktion in Querrichtung zu der Führungsschiene 1 frei verschieblich gelagert ist. In Führungsrichtung ist der Mitnehmer 11 mit dem Tragkörper 2 starr verbunden. Zu diesem Zweck kann beispielsweise eine an dem Tragkörper 2 jeweils stirnseitig angebrachte Platte 12 eine Nut 13 aufweisen, in welche ein Führungsvorsprung des Mitnehmers 11 hineinragt. Die Nut 13 und der Vorsprung verlaufen quer zur Längsrichtung der Führungsschiene 1.

Aufgrund der Vorspannung der als Biegefeder ausgebildeten Feder 7 üben die beiden Bremsbacken 3 an jeder Längsseite der Führungsschiene 1 eine zur Mitte der Führungsschiene 1 hin gerichtete Kraft aus, so daß der Tragkörper 2 an der Führungsschiene 1 festgeklemmt wird. Die Höhe dieser Bremskraft richtet sich nach der Größe der Vorspannung der Feder 7 und der Reibungskraft, die zwischen den Bremsbacken 3 und der Führungsschiene 1 auftritt. Die Vorspannung der Feder 7 läßt sich mit den Schrauben 10, die sich an den Druckstücken 9 abstützen, einstellen.

Es sind auch Konstruktionen denkbar, bei denen je eine Feder 7 und ein oder mehrere Kolben 6 sowie Druckstücke 9 an jeder Längsseite der Führungsschiene 1 und der entsprechenden Seite des Tragkörpers 2 angeordnet sind. Bei einer solchen Konstruktion braucht der Mitnehmer 11 nicht quer zur Führungsrichtung verschiebbar zu sein. Es ist auch ein Mitnehmer denkbar, der mit dem Tragkörper 2 starr verbunden ist.

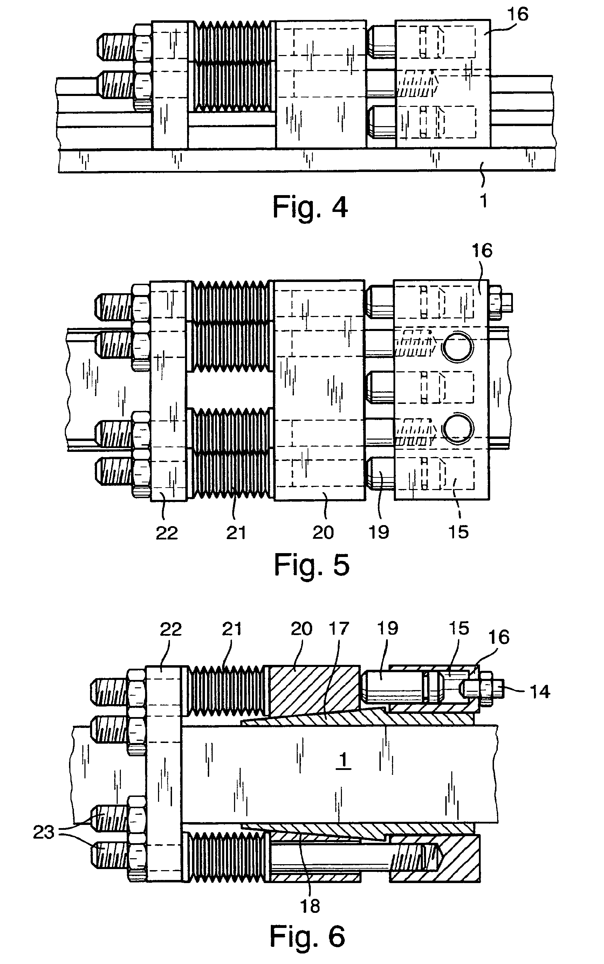

Bei dem Ausführungsbeispiel der Erfindung nach den Figuren 4 bis 6 können über einen Druckanschluß 14 eine oder mehrere miteinander verbundene Druckkammern 15, die sich in einem U-förmigen Tragkörper 16 befinden, mit einem Druckmittel beaufschlagt werden. Mit dem Tragkörper 16 sind zwei Bremsbacken 17 fest verbunden, deren äußere Oberflächen jeweils eine schiefe Ebene 18 bilden, so daß die Bremsbacken 17 keilförmig sind. Die Verbindung mit dem Tragkörper 16 kann jeweils durch Verstiften, Verschrauben oder Kleben realisiert werden. Die Druckkammern 15 sind mit Kolben 19 verschlossen, welche sich in Druckrichtung an einem ebenfalls U-förmigen Schieber 20 abstützen, der über die in Führungsrichtung aus dem Tragkörper 16 herausragenden Bremsbacken 17 geschoben wird. Die Innenflächen des Schiebers 20, welche jeweils die Bereiche der Bremsbacken 17 überdecken, sind entsprechend der Keilform der Bremsbacken 17 ausgebildet. Der Schieber 20 wird durch die auf ihn einwirkenden Kolbenkräfte in Führungsrichtung gegen Federn 21 gedrückt, welche aus beliebigen Federelementen, beispielsweise Tellerfedern bestehen können. Jede Feder 21 stützt sich in Führungsrichtung an einer gemeinsamen Platte 22 ab, über welche Zugstäbe 23 mit dem Tragkörper 16 verbunden sind. Statt der Zugstäbe 23 sind auch ein Rahmen oder seitliche Platten denkbar. In dem dargestellten Fall gehen die Zugstäbe 23 durch die Schieber 20 hindurch, der über entsprechende Durchgangsbohrungen verfügt. Durch die Druckkraft wird der Schieber 20 gegen die vorgespannten Federn 21 gedrückt, was zur Folge hat, daß er sich in Führungsrichtung von den schiefen Ebenen 18 der Bremsbacken 17 herunterbewegt, bis diese vollständig entlastet sind.

Beim Auslösen einer Notsituation kann der Druck des Druckmittels und damit die Kraft jedes Kolbens 19, die auf den Schieber 20 einwirkt, abfallen. Das hat zur Folge, daß der Schieber 20 nun von den Federn 21 auf die Keilflächen der Bremsbacken 17 gedrückt wird und diese aufgrund des Keilwinkels verstärkt gegen die Führungsschiene 1 drückt. Dadurch wird der Tragkörper 16 gebremst und an der Führungsschiene 1 festgeklemmt.

Zur Erhöhung der Bremswirkung kann die Fläche der schiefen Ebene 18 mit einem Gleitbelag versehen werden, um die Reibung zu vermindern. Ebenso ist die Anordnung von Wälzkörpern zwischen dieser Fläche und dem Schieber 20 denkbar, wie z. B. ein Nadelkäfig, Kugeln oder Zylinderrollen.

### Bezugszeichen

- 1: Führungsschiene
- 2: Tragkörper
- 3: Bremsbacke
- 4: Druckanschluß
- 5: Druckraum
- 6: Kolben
- 7: Feder
- 8: Leitung
- 9: Druckstück
- 10: Schraube
- 11: Mitnehmer
- 12: Platte
- 13: Nut
- 14: Druckanschluß
- 15: Druckkammer
- 16: Tragkörper
- 17: Bremsbacke
- 18: schiefe Ebene
- 19: Kolben
- 20: Schieber
- 21: Feder
- 22: Platte
- 23: Zugstab

## Patentansprüche

1. Linearführung mit einem längs einer Führungsschiene (1) verfahrbaren Tragkörper (2) und einer Bremsvorrichtung, welche auf die Führungsschiene (1) einwirkende Bremsbacken (3) und einen Kolben (6) aufweist, der in einem Druckraum (5) des Tragkörpers (2) von einem Druckmittel verschiebbar angeordnet ist, wobei die Bremsvorrichtung außerdem eine auf den Kolben (6) einwirkende Feder(7) aufweist, **dadurch gekennzeichnet, daß** in dem Tragkörper (2) neben dem Kolben (6) in Längsrichtung der Führungsschiene (1) ein Druckstück (9) angeordnet ist, welches in dem von dem Druckmittel nicht beaufschlagten Zustand des Kolbens (6) von der Feder (7) an eine der Bremsbacken (3) gedrückt ist, die an der Führungsschiene (1) anliegen.

2. Linearführung nach Anspruch 1, **dadurch gekennzeichnet, daß** in dem Tragkörper (2) in Längsrichtung der Führungsschiene (1) beidseitig neben dem Kolben (6) jeweils ein von der Feder (7) beaufschlagtes Druckstück (9) angeordnet ist.

3. Linearführung nach Anspruch 1, **dadurch gekennzeichnet, daß** in dem Bereich des Druckraumes (5), in welchem sich die der Bremsbacke (3) zugewandte Stirnfläche des Kolbens (6) befindet, eine Leitung (8) für das Druckmittel einmündet.

4. Linearführung nach Anspruch 1, **dadurch gekennzeichnet, daß** die auf den Kolben (6) einwirkende Feder (7) als Biegefeder ausgebildet ist.

5. Linearführung mit einem längs einer Führungsschiene (1) verfahrbaren Tragkörper (16) und einer Bremsvorrichtung, welche auf die Führungsschiene (1) einwirkende Bremsbacken (17) und mindestens einen Kolben (19) aufweist, der in einer Druckkammer (15) des Tragkörpers (16) von einem Druckmittel verschiebbar angeordnet ist, wobei die Bremsvorrichtung außerdem eine auf den Kolben (19) einwirkende Feder (21) aufweist, **dadurch gekennzeichnet, daß** zwischen dem Kolben (19) und der Feder (21) ein Schieber (20) angeordnet ist, von welchem die mit dem Tragkörper (16) verbundenen Bremsbacken (17) im drucklosen Zustand der Druckkammer (15) gegen die Führungsschiene (1) gedrückt sind, wobei die Bremsbacken (17) für die Verstärkung der Bremswirkung keilförmig ausgebildet sind und jeweils eine Oberfläche als schiefe Ebene (18) aufweisen, an welcher der Schieber (20) mit einer entsprechend geneigten Oberfläche anliegt.

6. Linearführung nach Anspruch 5, **dadurch gekennzeichnet, daß** die Bremsvorrichtung mehrere Federn (21) aufweist, welche an einer gemeinsamen Platte (22) abgestützt sind, die über Zugstäbe (23) mit dem Tragkörper (16) verbunden ist.

## Claims

1. Linear guide having a load-bearing element (2) which can be displaced along a guide rail (1), and having a brake apparatus which has brake shoes (3), which act on the guide rail (1), and a piston (6) which is arranged in a pressure space (5) of the load-bearing element (2) such that it can be displaced by a pressure medium, the brake apparatus, moreover, having a spring (7) which acts on the piston (6), **characterized in that** a pressure piece (9) is arranged in the load-bearing element (2) next to the piston (6) in the longitudinal direction of the guide rail (1), which pressure piece (9) is pressed by the spring (7) against one of the brake shoes (3) which bear against the guide rail (1) in the state of the piston (6), in which it is not loaded by the pressure medium.

2. Linear guide according to Claim 1, **characterized in that** in each case one pressure piece (9) which is loaded by the spring (7) is arranged in the load-bearing element (2) in the longitudinal direction of the guide rail (1) on both sides next to the piston (6).

3. Linear guide according to Claim 1, **characterized in that** a line (8) for the pressure medium opens in the region of the pressure space (5), in which that end face of the piston (6) which faces the brake shoe (3) is situated.

4. Linear guide according to Claim 1, **characterized in that** the spring (7) which acts on the piston (6) is configured as a leaf spring.

5. Linear guide having a load-bearing element (16) which can be displaced along a guide rail (1), and having a brake apparatus which has brake shoes (17), which act on the guide rail (1), and at least one piston (19) which is arranged in a pressure chamber (15) of the load-bearing element (16) such that it can be displaced by a pressure medium, the brake apparatus, moreover, having a spring (21) which acts on the piston (19), **characterized in that** a slide (20) is arranged between the piston (19) and the spring (21), by which slide (20) the brake shoes (17) which are connected to the load-bearing element (16) are pressed against the guide rail (1) in the pressureless state of the pressure chamber (15), the brake shoes (17) being of wedge-shaped configuration in order to boost the brake action and having in each case one surface as an oblique plane (18), against which the slide (20) bears with a correspondingly inclined surface.

6. Linear guide according to Claim 5, **characterized in that** the brake apparatus has a plurality of springs (21) which are supported on a common plate (22) which is connected to the load-bearing element (16) via tension rods (23).

## Revendications

1. Guidage linéaire comprenant un corps porteur (2) mobile le long d'un rail de guidage (1) et un dispositif de freinage qui présente des mâchoires de freinage (3) agissant sur le rail de guidage (1) et un piston (6) qui est disposé de manière à être poussé par un fluide sous pression dans une chambre de compression (5) du corps porteur (2), le dispositif de freinage présentant en outre un ressort (7) agissant sur le piston (6), **caractérisé en ce que** dans le corps porteur (2) à côté du piston (6) dans la direction longitudinale du rail de guidage (1), on dispose une pièce de pression (9) qui, en l'état du piston (6) non sollicité par le fluide sous pression, est poussée par le ressort (7) sur une des mâchoires de freinage (3) qui reposent sur le rail de guidage (1).

2. Guidage linéaire selon la revendication 1, **caractérisé en ce que** dans le corps porteur (2) dans la direction longitudinale du rail de guidage (1) de part et d'autre et à proximité du piston (6), une pièce de pression (9) respective sollicitée par le ressort (7) est disposée.

3. Guidage linéaire selon la revendication 1, **caractérisé en ce que** dans la région de la chambre de compression (5) dans laquelle se trouve la face avant du piston (6) tournée vers la mâchoire de freinage (3), une ligne (8) débouche pour le fluide sous pression.

4. Guidage linéaire selon la revendication 1, **caractérisé en ce que** le ressort (7) agissant sur le piston (6) est un ressort de flexion.

5. Guidage linéaire comprenant un corps porteur (16) mobile le long d'un rail de guidage (1) et un dispositif de freinage qui présente des mâchoires de freinage (17) agissant sur le rail de guidage (1) et au moins un piston (19) qui est disposé de manière à être poussé par un fluide sous pression dans une chambre de compression (15) du corps porteur (16), le dispositif de freinage présentant en outre un ressort (21) agissant sur le piston (19), **caractérisé en ce qu'**entre le piston (19) et le ressort (21), un poussoir (20) est placé depuis lequel les mâchoires de freinage (17) reliées au corps porteur (16) en l'état sans pression de la chambre de compression (15) sont poussées contre le rail de guidage (1), les mâchoires de freinage (17) étant cunéiformes pour renforcer l'effet de freinage et présentant chacune une surface comme plan incliné (18) sur lequel le poussoir (20) repose avec une surface inclinée de manière correspondante.

6. Guidage linéaire selon la revendication 5, **caractérisé en ce que** le dispositif de freinage comprend plusieurs ressorts (21) qui sont appuyés sur une plaque commune (22) qui est reliée au corps porteur (16) par des barres de traction (23).
